# EUROPÄISCHE PATENTSCHRIFT

(11) **EP 1 074 429 B1**
(45) Veröffentlichungstag und Bekanntmachung des Hinweises auf die Patenterteilung: **02.08.2006**
(21) Anmeldenummer: 00114080.5
(22) Anmeldetag: 07.07.2000
(51) Int. Cl.: B60Q 1/14

(54) **Lichtschaltereinheit**
Light switch unit
Unité de commutation d'éclairage

(30) Priorität: 03.08.1999 DE 19936386
(43) Veröffentlichungstag der Anmeldung: 07.02.2001
(73) Patentinhaber: Volkswagen Aktiengesellschaft, 38436 Wolfsburg (DE)
(72) Erfinder: Frohne, Hans-Joachim, Dipl.-Ing., 38165 Lehre (DE); Bischoff, Klaus, 38173 Evessen (DE)

(56) Entgegenhaltungen:
- DE-A- 3 935 836
- DE-A- 19 629 274
- US-A- 5 631 454

## Beschreibung

Die Erfindung betrifft eine Lichtschaltereinheit zur Steuerung von Beleuchtungsgruppen eines Kraftfahrzeugs, mit einem Gehäuse, in dem ein Drehschalter und mindestens ein erster und ein zweiter Druckschalter angeordnet sind.

Eine solche Lichtschaltereinheit ist aus der DE 196 38 773 bekannt. Hierbei ist ein Drehschalter zur Einschaltung der folgenden Beleuchtungsgruppen in einem Gehäuse angeordnet: Sämtliche Beleuchtungsgruppen ausgeschaltet, Parklicht links, Parklicht rechts, Standlicht und Fahrtlicht. Rechts neben dem Drehschalter sind zwei Drucktastenschalter nebeneinander bzw. übereinander angeordnet, die zum Ein- bzw. Ausschalten der Nebelscheinwerfer und der Nebelschlußleuchte dienen. Außerdem sind noch zwei Rändelräder vohanden, mit denen die Leuchtweite des Fahrlichts des Kraftfahrzeugs sowie die Helligkeit der Instrumentenbeleuchtung verändert werden können. Der Drehschalter kann als Dreh-Zug-Schalter ausgebildet sein, so daß mit ihm durch Ziehen auch noch die Innenbeleuchtung an- bzw. ausgeschaltet werden kann. Mit einer solchen Lichtschaltereinheit ist für den Fahrer jedoch keine räumlich-funktionale Zuordnung der einzelnen Schalter zu den durch sie geschalteten Beleuchtungsgruppen gegeben. Das heißt, daß aus der Postion der Drucktastenschalter nicht ersichtlich ist, welche Beleuchtungsgruppen durch sie geschaltet werden.

Desweiteren zeigt die EP 0 702 842 eine Lichtschaltereinheit mit einem Gehäuse, in welchem ein Drehschalter angeordnet ist, der drei Schalterstellungen aufweist, wobei in der ersten Schalterstellung das Stand- sowie Fahrtlicht ausgeschaltet, in der zweiten Schalterstellung das Standlicht eingeschaltet und in der dritten Schalterstellung das Fahrtlicht eingeschaltet ist. Die jeweilige Schalterstellung wird durch entsprechende, beleuchtete Funktionssymbole im Gehäuse, angezeigt. Auch diese Lichtschaltereinheit weist zwei Ein-/Aus-Schalter auf, mit denen die Nebelleuchten bzw. die Nebelschlußleuchte gesteuert werden können. Diese beiden Schalter sind ebenfalls mit dem jeweilgen zugeordneten Symbol gekennzeichnet, das beleuchtbar ist. Im Gegensatz zu den beiden oben genannten Druckschriften sind die zwei Ein-/Aus-Schalter jedoch unterhalb des Drehschalters horizontal nebeneinander angeordnet. Links und rechts dieser beiden Schalter ist jeweils ein Rändelrad, mit dem die Leuchtweite reguliert bzw. die Helligkeit der Armaturenbeleuchtung eingestellt werden kann. Auch hierbei ergibt sich, wie bei den beiden oben genannten Druckschriften, für den Fahrer das Problem, daß eine räumlich-funktionale Zuordnung der einzelnen Ein-/Aus-Schalter zu den von ihnen geschalteten Beleuchtungsgruppen nicht gegeben ist. Der Fahrer muß also jedes Mal den Schalter suchen, der die von ihm gewünschte Beleuchtungsgruppe schaltet. Dies lenkt ihn von der Beobachtung des Verkehrsgeschehens ab.

Deswegen ist es die Aufgabe der Erfindung, eine Lichtschaltereinheit mit einer neuartigen Anordnung der Schalter zueinander zu schaffen, wobei die einzelnen Schalter so angeordnet sind, daß zwischen ihrer räumlichen Anordnung und ihrer Funktion ein direkter Zusammenhang besteht.

Die Aufgabe wird durch eine Lichtschaltereinheit der eingangs genannten Art gelöst, wobei die mindestens zwei Druckschalter im wesentlichen diametral bezüglich des Drehschalters angeordnet sind.

Durch die diametrale Anordnung der Druckschalter bezüglich des Drehschalters liegen die beiden Druckschalter soweit auseinander und auf unterschiedlichen Seiten des Drehschalters, daß sie leicht vom Fahrer auseinander gehalten werden können. Somit ist eine Anordnung der beiden Druckschalter möglich, die in räumlich-funktionalem Zusammenhang mit den Beleuchtungsgruppen steht, die durch sie gesteuert werden können. Für einen Fahrer ist es dadurch besonders einfach, denjenigen Druckschalter zu finden, der der Beleuchtungsgruppe zugeordnet ist, die er betätigen möchte.

Eine vorteilhafte Weiterbildung der Erfindung sieht vor, daß mittels des Drehschalters die Hauptbeleuchtungsgruppen und mittels der Druckschalter Nebenbeleuchtungsgruppen schaltbar sind. Bei den Hauptbeleuchtungsgruppen handelt es sich um solche Beleuchtungsgruppen, die sowohl an der Frontpartie als auch am Heck des Kraftfahrzeugs angeordnet sind. Zu den Nebenleuchtgruppen gehören die übrigen Beleuchtungsgruppen. Eine solche Ausgestaltung führt zu einer Entkoppelung von verschiedenen Bedienebenen in getrennte Bedienbereiche und einer Entflechtung der verschiedenen Funktionen der Schalter. Dadurch werden die Funktionen der einzelnen Schalter für den Fahrer noch deutlicher und er wird noch weniger vom Verkehrsgeschehen abgelenkt, da er kaum mehr damit Zeit verbringen muß, nach dem gewünschten Schalter zu suchen.

Eine weitere vorteilhafte Weiterbildung der Erfindung sieht vor, daß die Druckschalter im wesentlichen in einer Horizontalen oder Vertikalen angeordnet sind. Bei einer horizontalen Anordnung hat sich gezeigt, daß der Drehschalter von einem Durchschnittsfahrer als Zentrum des Kraftfahrzeugs und die links bzw. rechts vom Drehschalter angeordneten Druckschalter als das vordere bzw. hintere Ende des Kraftfahrzeuges aufgefaßt werden. Dadurch kann ein direkter, einfach zu erfassender räumlich-funktionaler Zusammenhang zwischen Beleuchtungsgruppen, die nur an der Frontpartie bzw. am Heck des Kraftfahrzeuges angeordnet sind, erzielt werden. Eine vergleichbare Assoziation ergibt sich auch bei einer vertikalen Anordnung der Druckschalter. Dabei wird mit dem oberhalb des Drehschalters angeordneten Druckschalter eine Beleuchtungsgruppe in Verbindung gebracht, die sich in der Frontpartie des Kraftfahrzeuges befindet und mit dem Druckschalter, der unterhalb des Drehschalters angeordnet ist, eine Beleuchtungsgruppe, die am Heck des Kraftfahrzeuges angeordnet ist.

Eine weitere vorteilhafte Weiterbildung der Erfindung sieht vor, daß der erste Druckschalter links vom Drehschalter angeordnet ist und mit diesem die Nebelscheinwerfer schaltbar sind und der zweite Druckschalter rechts vom Drehschalter angeordnet ist und mit diesem die Nebelschlußleuchte schaltbar ist. Nachdem der links vom Drehschalter angeordnete Druckschalter von einem Durchschnittsfahrer der Frontpartie des Kraftfahrzeuges zugeordnet wird, assoziiert er die ebenfalls nur in der Frontpartie angeordneten Nebelscheinwerfer sofort mit diesem Druckschalter. Genau umgekehrt verhält es sich mit dem Druckschalter, der rechts vom Drehschalter angeordnet ist. Dieser wird sofort mit dem Heck des Kraftfahrzeugs in Verbindung gebracht. Nachdem die Nebelschlußleuchte nur am Heck des Kraftfahrzeuges angebracht ist, ist eine intuitive Zuordnung der Nebelschlußleuchte zu diesem Druckschalter durch den Fahrer gegeben.

Eine weitere vorteilhafte Weiterbildung der Erfindung sieht vor, daß die Druckschalter Tastschalter sind. Tastschalter sind sehr einfach zu bedienende Druckschalter, die gleichzeitig auch sehr zuverlässig sind. Dabei sind sowohl Tastschalter möglich, die zwei verschiedene Stellungen aufweisen, als auch solche, die nur eine Stellung aufweisen und bei jedem Drücken einen Impuls weitergeben, der genau das Gegenteil des vorher eingestellten Zustandes bewirkt.

Eine weitere vorteilhafte Weiterbildung der Erfindung sieht vor, daß der Drehschalter drei Stellungen aufweist, wobei in der ersten Stellung sämtliche Beleuchtungsgruppen ausgeschaltet sind, in der zweiten Stellung das Standlicht und in der dritten Stellung das Fahrtlicht angeschaltet ist. Dies sind die drei Standardeinstellungen, die für ein gewöhnliches Kraftfahrzeug Verwendung finden. Bevorzugt weist der Drehschalter eine vierte Stellung auf, in der eine "auto-Licht"-Schaltung aktiviert ist. Dies ist eine Funktion, bei der die Hauptbeleuchtungsgruppen automatisch an- bzw. ausgeschaltet werden. Dazu werden mittels eines Sensors die Außenlichtverhältnisse registriert. Wenn die Helligkeit unter einen vorgegebenen Wert fällt, wird das Fahrtlicht automatisch eingeschaltet.

Eine weitere vorteilhafte Weiterbildung der Erfindung sieht vor, daß den einzelnen Stellungen des Drehschalters auf dem Gehäuse jeweils ein Symbol zugeordnet ist und/oder daß auf den Druckschaltern jeweils ein Symbol angeordnet ist. Dadurch ist es möglich, daß der Fahrer eindeutig und schnell erkennen kann, welche Stellung bzw. welcher Druckschalter welchen Beleuchtungsgruppen zugeordnet ist.

Eine weitere vorteilhafte Weiterbildung der Erfindung sieht vor, daß im Gehäuse und/oder in den Druckschaltern Beleuchtungselemente angeordnet sind, durch die die Symbole beleuchtbar sind. Bevorzugt wird, daß jedem Symbol ein eigenes Beleuchtungselement zugeordnet ist. Dadurch ist es für den Fahrer auch bei schlechten Lichtverhältnissen im Innenraum des Kraftfahrzeuges möglich, zu erkennen, welche Beleuchtungsgruppe durch den jeweiligen Schalter bzw. die jeweilige Schalterstellung gesteuert wird.

Eine weitere vorteilhafte Weiterbildung der Erfindung sieht vor, daß die Beleuchtungselemente Licht in zwei Farben emittieren können. Dadurch kann der Zustand der Druckschalter durch die Farbe des Beleuchtungselements wiedergegeben werden. Außerdem kann dabei auch die Stellung, in der sich der Drehschalter befindet, durch Licht unterschiedlicher Farbe verdeutlicht werden.

Eine weitere vorteilhafte Weiterbildung der Erfindung sieht vor, daß die Beleuchtungselemente mit der Zündung des Kraftfahrzeugs verbunden sind. Dadurch ist es möglich, daß sämtliche Schalter bzw. Schalterstellungen auch bei schlechten Lichtverhältnissen im Innenraum des Kraftfahrzeuges schon dann erkannt werden können, wenn der Fahrer den Zündschlüssel in das Zündschloß gesteckt hat und diesen auf die Stellung "Zündung" gedreht hat.

Weitere vorteilhafte Weiterbildungen der Erfindung sind Gegenstand der Unteransprüche.

Weitere Vorteile und Einzelheiten der Erfindung sind Gegenstand des anhand der Figuren beschriebenen Ausführungsbeispiels.

Es zeigen:
- Figur 1: ein Ausführungsbeispiel einer Lichtschaltereinheit, die in eine Konsole eines Kraftfahrzeuges eingebaut ist, und
- Figur 2: die Lichtschaltereinheit aus Figur 1 in Richtung II gesehen.

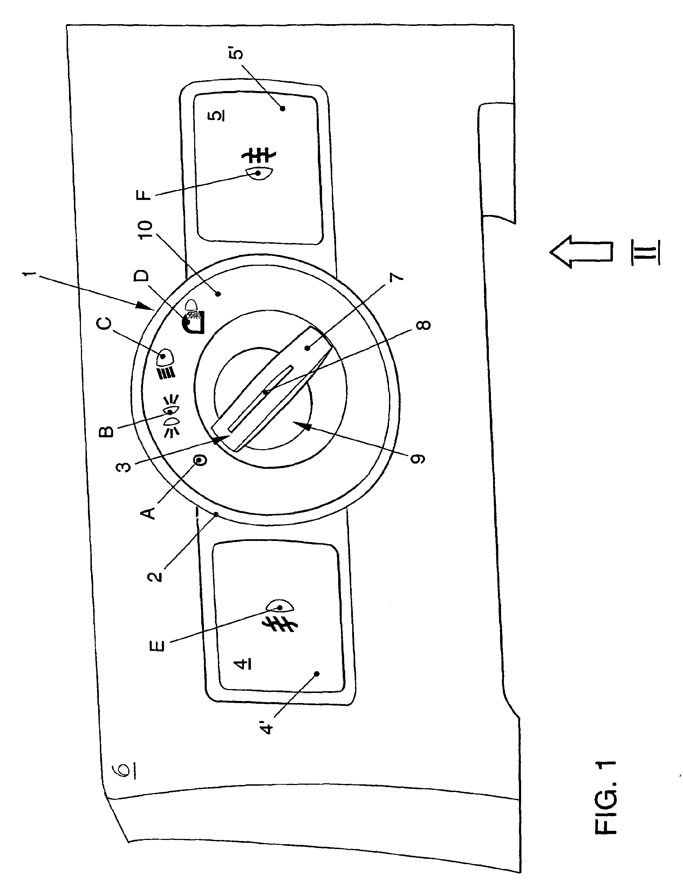

Figur 1 zeigt eine Konsole 6 in einem Kraftfahrzeug, in die eine Lichtschaltereinheit 1 eingesetzt ist. Die Lichtschaltereinheit 1 weist ein Gehäuse 2 auf, welches mit der Konsole 6 verbunden ist. Das Gehäuse 2 ist horizontal ausgerichtet, wobei es zentral einen runden Drehschalter 3 beherbergt und in den beiden seitlichen Teilen, die wie Flügel aussehen, jeweils ein im wesentlichen rechteckiger Druckschalter 4, 5 angeordnet ist.

Mit dem Drehschalter 3 sind die Hauptbeleuchtungsgruppen des Kraftfahrzeugs steuerbar. Hierbei handelt es sich um das Standlicht und das Fahrtlicht. Durch die spezielle horizontale Orientierung des Gehäuses 2 wird, wie sich herausgestellt hat, einem Durchschnittsfahrer vermittelt, daß der Druckschalter 4, der links vom Drehschalter 3 angeordnet ist, funktional der Frontpartie des Kraftfahrzeuges zugeordnet ist. Dem wird hier Rechnung getragen, indem mit diesem Druckschalter 4, der als Tastschalter 4' ausgebildet ist, die Nebelscheinwerfer geschaltet werden können. Die Nebelscheinwerfer sind nur in der Frontpartie des Kraftfahrzeuges angeordnet, so daß dies genau der Assoziation entspricht, die der Durchschnittsfahrer mit der räumlichen Anordnung des Tastschalters 4' in Verbindung bringt. Somit muß der Fahrer nicht lange suchen, um die Nebelscheinwerfer an- bzw. ausschalten zu können, sondern es ist ihm sofort klar, daß er den Tastschalter 4' links des Drehschalters 3 bedienen muß.

Ähnlich verhält es sich mit dem Druckschalter 5, der rechts des Drehschalters 3 angeordnet ist. Ein Durchschnittsfahrer bringt die Position dieses Druckschalters, der ebenfalls als ein Tastschalter 5' ausgebildet ist, mit dem Heck des Kraftfahrzeuges in Verbindung. Durch diesen Tastschalter 5' wird die Nebelschlußleuchte bedient. Die Assoziation des Fahrers, daß es sich bei dem Tastschalter 5' um einen solchen handelt, der eine Beleuchtungsgruppe steuert, die am Heck des Kraftfahrzeuges angeordnet ist, führt deshalb dazu, daß der Fahrer ohne Nachdenken zu müssen direkt auf den Tastschalter 5' drückt, wenn er die Nebelschlußleuchte an- bzw. ausschalten möchte.

Der Drehschalter 3 weist einen Wahlhebel 7 auf, der in einer Vertiefung 9 eines ihn umgebenden Ringes 10 drehbar gelagert ist. Der Ring 10 ist bezüglich des Gehäuses 2 lagefixiert. Auf dem Wahlhebel 7 ist eine durchsichtige Fläche 8 in Form eines Balkens, der parallel zur Ausdehnung des Wahlhebels 7 ausgerichtet ist, angeordnet. Unterhalb des Balkens 8 ist innerhalb des Wahlhebels 7 ein Beleuchtungselement (nicht gezeigt) angeordnet. Dadurch ist es möglich, daß der Fahrer im Dunkeln den beleuchteten Balken 8 und somit die Orientierung des Wahlhebels 7 problemlos erkennen kann. Damit der Fahrer gut erkennen kann, welche Beleuchtungsgruppe gerade angeschaltet ist, sind die vier möglichen Stellungen des Wahlhebels 7 bezüglich des Ringes 10 in der Lichtschaltereinheit 1 mit Symbolen A-D gekennzeichnet, die auf dem Ring 10 angebracht sind. Unter den einzelnen Symbolen A-D ist jeweils ein Beleuchtungselement (nicht gezeigt) angeordnet. Dadurch kann in Verbindung mit dem beleuchteten Balken 8 des Wahlhebels 7 auch im Dunkeln problemlos erkannt werden, welche Beleuchtungsgruppe gerade eingeschaltet ist. Die beiden Tastschalter 4', 5' weisen jeweils ein durchsichtiges Symbol E, F auf. Unter den Tastschaltern 4',5' ist jeweils ein Beleuchtungselement angeordnet, so daß die Symbole E, F vom Fahrer leicht auch bei Dunkelheit erkannt werden können.

Die Beleuchtungselemente sind mit der Zündung des Kraftfahrzeugs verbunden, so daß die Symbole automatisch beleuchtet sind, sobald der Fahrer den Zündschlüssel im Zündschloß auf die Stellung "Zündung" gedreht hat. Die Beleuchtungselemente strahlen Licht unterschiedlicher Farbe aus, je nach dem ob die ihr zugeordnete Beleuchtungsgruppe ein- oder ausgeschaltet ist. Dadurch kann der Zustand der Beleuchtungsgruppen vom Fahrer sehr schnell erkannt werden, da er nur darauf achten muß, in welcher Farbe die Symbole A-E aufleuchten. Damit ist eine Erhöhung der Verkehrssicherheit gegeben, da der Fahrer zum Erfassen des aktuellen Beleuchtungszustandes seines Kraftfahrzeugs seinen Blick nur für einen kurzen Augenblick von der Straße abwenden muß.

Bei den vier auf dem Ring 10 angebrachten Symbolen A-D, die für die vier Stellungen des Wahlhebels 7 stehen, handelt es sich um die folgenden:

Der ersten Stellung des Drehschalters 3 ist ein Symbol zugeordnet, das mit der Bezugsziffer A bezeichnet ist und welches charakterisierend dafür ist, daß sämtliche Beleuchtungsgruppen des Kraftfahrzeuges ausgeschaltet sind.

In der zweiten Stellung des Drehschalters 3 zeigt der Balken 8 des Wahlhebels 7 auf ein Symbol, das mit der Bezugsziffer B bezeichnet ist und welches charakterisierend für die Beleuchtungsgruppe des Standlichtes ist. In dieser Stellung ist demnach das Standlicht des Kraftfahrzeuges angeschaltet.

Das mit der Bezugsziffer C bezeichnete Symbol, welches der dritten Stellung des Drehschalters 3 zugeordnet ist, ist charakterisierend für das Fahrtlicht. In dieser Stellung ist somit das Fahrtlicht angeschaltet.

Das mit der Bezugsziffer D bezeichnete Symbol, welches der vierten Stellung des Drehschalters 3 zugeordnet ist, zeigt einen Tunnel, der mit dem Symbol für das Fahrtlicht kombiniert ist. In dieser vierten Stellung wird eine automatische Lichteinschaltung aktiviert, das sogenannte "auto-Licht". Wird der Drehschalter 3 in seine vierte Stellung gebracht, so wird eine automatische Einschaltung der jeweils für die gegebenen Lichtverhältnisse nötigen Beleuchtungsgruppen gewährleistet. Fährt das Kraftfahrzeug beispielsweise in einen Tunnel ein, so schaltet sich automatisch das Fahrtlicht an. Nach dem Austritt des Fahrzeugs aus dem Tunnel wird das Fahrtlicht automatisch wieder abgeschaltet. Dies ist besonders für Straßen vorteilhaft, bei denen ständig Tunnels mit Abschnitten am Tageslicht abwechseln, wie dies beispielsweise an Küstenstraßen häufig der Fall ist. In dieser vierten Stellung werden bei einer Sichtweite, die unter einem vorgegebenen Wert fällt, automatisch die Nebelscheinwerfer angestellt. Nimmt die Sichtweite wieder zu, so daß sie über einen vorgegebenen Wert hinausgeht, so werden die Nebelscheinwerfer wieder abgeschaltet. Bei Nebel und einer Sichtweite unter 50 Meter wird bei aktiviertem "auto-Licht" automatisch die Nebelschlußleuchte angeschaltet. Steigt die Sichtweite wieder über 50 Meter, so wird die Nebelschlußleuchte automatisch abgeschaltet. Somit entfällt das bekannte Problem, daß Autos, die mit eingeschalteter Nebelschlußleuchte bei einer Sichtweite über 50 Meter fahren, den von hinter heranfahrenden Verkehr blenden. Das "auto-Licht" arbeitet mit Sensoren, deren Daten in einem Steuergerät ausgewertet werden, das dann die jeweilige Aktivierung bzw. Deaktivierung der Beleuchtungsgruppen steuert. Ein solches System ist prinzipiell bekannt und muß deshalb hier nicht weiter erläutert werden.

Bei dem mit der Bezugsziffer E bezeichneten Symbol, das auf dem linken Tastschalter 4' angeordnet ist, handelt es sich um das die Nebelscheinwerfer charakterisierende Symbol. Mit diesem Tastschalter 4' können somit die Nebelscheinwerfer aktiviert bzw. deaktiviert werden.

Das mit der Bezugsziffer F bezeichnete Symbol, welches auf dem rechten Tastschalter 5' angeordnet ist, ist charakterisierend für die Nebelschlußleuchte. Durch diesen Tastschalter kann somit die Nebelschlußleuchte aktiviert bzw. deaktiviert werden.

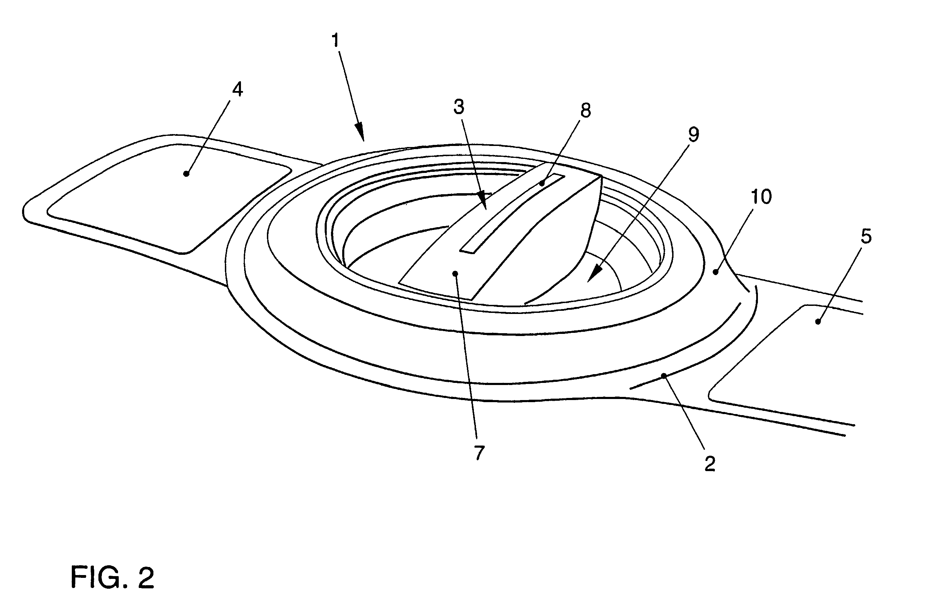

Figur 2 zeigt gut die räumliche Gestalt der Lichtschaltereinheit 1. Die beiden Druckschalter 4, 5 wölben sich über das Gehäuse 2, so daß sie sehr einfach und komfortabel vom Fahrer durch einen Druck bedient werden können. Der Ring 10, welcher den Wahlhebel 7 des Drehschalters 3 einschließt, ist wallartig ausgebildet, wobei er von außen sanft ansteigt und nach innen hin abfällt. In der dadurch ausgebildeten Vertiefung 9 ist der längliche Wahlhbebel 7 mit dem durchsichtigen Balken 8 drehbar angeordnet. Der Wahlhebel 7 wirkt dabei wie eine drehbare Mauer, die die Vertiefung 9 in zwei nicht miteinander kommunizierende Hälften teilt. Der Wahlhebel 7 erstreckt sich hierbei entlang eines Durchmessers der Vertiefung 9 von einer Innenfläche des Rings 10 bis zu der ihr gegenüberliegenden Fläche des Rings 10. Durch eine solche Ausgestaltung kann der Wahlhebel 7 des Drehschalters 3 durch den Fahrer einfach und komfortabel in seine jeweils gewünschte Stellung gedreht werden.

## Patentansprüche

1. Lichtschaltereinheit (1) zur Steuerung von Beleuchtungsgruppen für ein Kraftfahrzeug mit einem Gehäuse (2), in dem ein Drehschalter (3) und mindestens ein erster und ein zweiter Druckschalter (4, 5) angeordnet sind, **dadurch gekennzeichnet, daß** die mindestens zwei Druckschalter (4, 5) im wesentlichen diametral bezüglich des Drehschalters (3) angeordnet sind.

2. Lichtschaltereinheit (1) nach Anspruch 1, **dadurch gekennzeichnet, daß** mittels des Drehschalters (3) die Hauptbeleuchtungsgruppen und mittels der Druckschalter (4, 5) Nebenbeleuchtungsgruppen schaltbar sind.

3. Lichtschaltereinheit (1) nach einem der vorstehenden Ansprüche, **dadurch gekennzeichnet, daß** die mindestens zwei Druckschalter (4, 5) im wesentlichen in einer Horizontalen oder Vertikalen angeordnet sind.

4. Lichtschaltereinheit (1) nach Anspruch 3, **dadurch gekennzeichnet, daß** der erste Druckschalter (4) links vom Drehschalter (3) angeordnet ist und der zweite Druckschalter (5) rechts vom Drehschalter (3) angeordnet ist.

5. Lichtschaltereinheit (1) nach Anspruch 4, **dadurch gekennzeichnet, daß** durch den ersten Druckschalter (4) an der Frontseite des Fahrzeugs angeordnete Beleuchtungsgruppen und durch den zweiten Druckschalter (5) an der rückwärtigen Seite des Fahrzeugs angeordnete Beleuchtungsgruppen schaltbar sind.

6. Lichtschaltereinheit (1) nach Anspruch 3 oder 4, **dadurch gekennzeichnet, daß** durch den ersten Druckschalter (4) die Nebelscheinwerfer und durch den zweiten Druckschalter (5) die Nebelschlußleuchte schaltbar ist.

7. Lichtschaltereinheit (1) nach einem der vorstehenden Ansprüche, **dadurch gekennzeichnet, daß** die Druckschalter (4, 5) Tastschalter (4', 5') sind.

8. Lichtschaltereinheit (1) nach einem der vorstehenden Ansprüche, **dadurch gekennzeichnet, daß** der Drehschalter (3) drei Stellungen aufweist, wobei in der ersten Stellung sämtliche Beleuchtungsgruppen ausgeschaltet sind, in der zweiten Stellung das Standlicht und in der dritten Stellung das Fahrtlicht angeschaltet ist.

9. Lichtschaltereinheit (1) nach Anspruch 8, **dadurch gekennzeichnet, daß** der Drehschalter (3) eine vierte Stellung aufweist, in der eine "auto-Licht"-Schaltung aktiviert ist.

10. Lichtschaltereinheit (1) nach einem der vorstehenden Ansprüche, **dadurch gekennzeichnet, daß** den einzelnen Stellungen des Drehschalters (3) auf dem Gehäuse (2) jeweils ein Symbol (A, B, C, D) zugeordnet ist und/oder daß auf den Druckschaltern (4, 5) jeweils ein Symbol (E, F) angeordnet ist.

11. Lichtschaltereinheit (1) nach Anspruch 10, **dadurch gekennzeichnet, daß** im Gehäuse (2) und/oder in den Druckschaltern (4, 5) Beleuchtungselemente angeordnet sind, durch die die Symbole (A-F) beleuchtbar sind.

12. Lichtschaltereinheit (1) nach Anspruch 11, **dadurch gekennzeichnet, daß** jedem Symbol (A-F) ein eigenes Beleuchtungselement zugeordnet ist.

13. Lichtschaltereinheit (1) nach einem der Ansprüche 11 oder 12, **dadurch gekennzeichnet, daß** die Beleuchtungselemente wählbar Licht in zwei Farben emittiert.

14. Lichtschaltereinheit (1) nach einem der Ansprüche 11 bis 13, **dadurch gekennzeichnet, daß** die Beleuchtungselemente mit der Zündung des Kraftfahrzeugs verbunden sind.

## Claims

1. Light switch unit (1) for controlling illumination groups for a motor vehicle having a housing (2), in which a rotary switch (3) and at least one first and one second pushbutton switch (4, 5) are arranged, **characterized in that** the at least two pushbutton switches (4, 5) are arranged essentially diametrically with respect to the rotary switch (3).

2. Light switch unit (1) according to Claim 1, **characterized in that** the main illumination groups can be operated by means of the rotary switch (3), and the secondary illumination groups can be operated by means of the pushbutton switches (4, 5).

3. Light switch unit (1) according to one of the preceding claims, **characterized in that** the at least two pushbutton switches (4, 5) are arranged essentially on a horizontal or a vertical.

4. Light switch unit (1) according to Claim 3, **characterized in that** the first pushbutton switch (4) is arranged to the left of the rotary switch (3), and the second pushbutton switch (5) is arranged to the right of the rotary switch (3).

5. Light switch unit (1) according to Claim 4, **characterized in that** illumination groups arranged on the front of the vehicle can be operated by the first pushbutton switch (4), and illumination groups arranged on the rear side of the vehicle can be operated by the second pushbutton switch (5).

6. Light switch unit (1) according to Claim 3 or 4, **characterized in that** the foglights can be operated by the first pushbutton switch (4), and the rear foglight can be operated by the second pushbutton switch (5).

7. Light switch unit (1) according to one of the preceding claims, **characterized in that** the pushbutton switches (4, 5) are momentary-contact switches (4', 5').

8. Light switch unit (1) according to one of the preceding claims, **characterized in that** the rotary switch (3) has three settings, all of the illumination groups being switched off in the first setting, the parking light being switched on in the second setting, and the driving light being switched on in the third setting.

9. Light switch unit (1) according to Claim 8, **characterized in that** the rotary switch (3) has a fourth setting, in which an "auto-light" operation is activated.

10. Light switch unit (1) according to one of the preceding claims, **characterized in that** in each case one symbol (A, B, C, D) is associated with the individual settings of the rotary switch (3) on the housing (2) and/or **in that** in each case one symbol (E, F) is arranged on the pushbutton switches (4, 5).

11. Light switch unit (1) according to Claim 10, **characterized in that** illumination elements are arranged in the housing (2) and/or in the pushbutton switches (4, 5), by means of which illumination elements the symbols (A - F) can be illuminated.

12. Light switch unit (1) according to Claim 11, **characterized in that** a dedicated illumination element is associated with each symbol (A - F).

13. Light switch unit (1) according to either of Claims 11 and 12, **characterized in that** the illumination elements emit light selectively in two colours.

14. Light switch unit (1) according to one of Claims 11 to 13, **characterized in that** the illumination elements are connected to the ignition of the motor vehicle.

## Revendications

1. Unité de commutation d'éclairage (1) pour commander des groupes d'éclairage, destinée à un véhicule à moteur avec un boîtier (2), dans lequel sont disposés un commutateur rotatif (3) et au moins un premier et un deuxième interrupteur à poussoir (4,5), **caractérisée en ce que** lesdits au moins deux interrupteurs à poussoir (4,5) sont disposés sensiblement diamétralement par rapport au commutateur rotatif (3).

2. Unité de commutation d'éclairage (1) selon la revendication 1, **caractérisée en ce que** des groupes d'éclairage principaux peuvent être commutés au moyen du commutateur rotatif (3) et des groupes d'éclairage auxiliaires peuvent être commutés au moyen des interrupteurs à poussoir (4,5).

3. Unité de commutation d'éclairage (1) selon l'une quelconque des revendications précédentes, **caractérisée en ce que** lesdits au moins deux interrupteurs à poussoir (4,5) sont disposés sensiblement selon une horizontale ou une verticale.

4. Unité de commutation d'éclairage (1) selon la revendication 3, **caractérisée en ce que** le premier interrupteur à poussoir (4) est disposé à la gauche du commutateur rotatif (3) et le deuxième interrupteur à poussoir (5) est disposé à la droite du commutateur rotatif (3).

5. Unité de commutation d'éclairage (1) selon la revendication 4, **caractérisée en ce que** des groupes d'éclairage disposés sur le côté avant du véhicule peuvent être commutés à l'aide du premier interrupteur à poussoir (4) et des groupes d'éclairage disposés sur le côté arrière du véhicule peuvent être commutés à l'aide du deuxième interrupteur à poussoir (5).

6. Unité de commutation d'éclairage (1) selon la revendication 3 ou 4, **caractérisée en ce que** les phares antibrouillard peuvent être commutés à l'aide du premier interrupteur à poussoir (4) et les feux antibrouillard arrière peuvent être commutés à l'aide du deuxième interrupteur à poussoir (5).

7. Unité de commutation d'éclairage (1) selon l'une quelconque des revendications précédentes, **caractérisée en ce que** les interrupteurs à poussoir (4,5) sont des boutons poussoirs (4', 5').

8. Unité de commutation d'éclairage (1) selon l'une quelconque des revendications précédentes, **caractérisée en ce que** le commutateur rotatif (3) présente trois positions, tous les groupes d'éclairage étant éteints dans la première position, les feux de position étant allumés dans la deuxième position et les feux de croisement étant allumés dans la troisième position.

9. Unité de commutation d'éclairage (1) selon la revendication 8, **caractérisée en ce que** le commutateur rotatif (3) présente une quatrième position dans laquelle un circuit "d'éclairage automatique" est activé.

10. Unité de commutation d'éclairage (1) selon l'une quelconque des revendications précédentes, **caractérisée en ce qu'**un symbole (A,B,C,D) est associé respectivement aux différentes positions du commutateur rotatif (3) sur le boîtier (2) et/ou qu'un symbole (E,F) est disposé respectivement sur les interrupteurs à poussoir (4,5).

11. Unité de commutation d'éclairage (1) selon la revendication 10, **caractérisée en ce que** dans le boîtier (2) et/ou dans les interrupteurs à poussoir (4,5), sont disposés des éléments d'éclairage par le biais desquels les symboles (A-F) peuvent être éclairés.

12. Unité de commutation d'éclairage (1) selon la revendication 11, **caractérisée en ce qu'**un élément propre d'éclairage est associé à chaque symbole (A-F).

13. Unité de commutation d'éclairage (1) selon l'une quelconque des revendications 11 ou 12, **caractérisée en ce que** les éléments d'éclairage émettent de la lumière en deux couleurs au choix.

14. Unité de commutation d'éclairage (1) selon l'une quelconque des revendications 11 à 13, **caractérisée en ce que** les éléments d'éclairage sont reliés à l'allumage du véhicule.
